# EUROPÄISCHE PATENTSCHRIFT

(11) **EP 2 250 944 B1**
(45) Veröffentlichungstag und Bekanntmachung des Hinweises auf die Patenterteilung: **12.10.2011**
(21) Anmeldenummer: 10161567.2
(22) Anmeldetag: 30.04.2010
(51) Int. Cl.: A47C 27/06

(54) **Federkernelement für den Einsatz in eine Matratze, beispielsweise Taschenfederkernmatratze.**
Spring core element for use in a mattress, for example pocket spring core mattress
Elément de ressort pour l'installation dans un matelas, par exemple un matelas à ressort alvéolé

(30) Priorität: 12.05.2009 DE 202009004803 U
(43) Veröffentlichungstag der Anmeldung: 17.11.2010
(73) Patentinhaber: Froli Kunststoffwerk Heinrich Fromme OHG, 33758 Schloss Holte-Stukenbrock (DE)
(72) Erfinder: Fromme-Ruthmann, Margret, 33758, Schloß Holte-Stukenbrock (DE)
(74) Vertreter: Flötotto, Hubert

(56) Entgegenhaltungen:
- EP-A2- 1 843 059
- DE-A1- 2 015 659
- DE-U1-202005 013 020
- DE-U1-202007 000 005

## Beschreibung

### Technisches Umfeld

Die Erfindung betrifft ein Federkernelement für den Einsatz in eine Matratze, beispielsweise eine Taschenfederkernmatratze, umfassend ein als Auflageteller ausgebildetes Oberteil sowie ein als Fußplatte ausgebildetes Unterteil, wobei zwischen dem Auflageteller und der Fußplatte ein Federkörper angeordnet ist.

### Stand der Technik

Aus dem Stand der Technik sind beispielsweise Taschenfederkernmatratzen bekannt, wobei in dem Matratzenmaterial Hohlräume in Form von Taschen vorgesehen sind, in denen unterstützende Federelemente, wie beispielsweise Spiralfedern, über die Fläche verteilt angeordnet sind. Somit erhält die Matratze über ihre Fläche eine gefederte Steifigkeit. Für derartige Taschenfederkernmatratzen sind unterschiedliche Arten von Federelementen oder Federkörper bekannt, wobei diese vornehmlich aus Metall bestehen. Bei der Herstellung derartiger Taschenfederkernmatratzen wird es angestrebt, die aus Metall gebildeten Federelemente durch Kunststofffederelemente zu ersetzen. Denn die Kunststofffederelemente weisen gegenüber den metallischen Federelementen Vorzüge auf.

Bei den bekannten Kunststofffederelementen, die bereits in Taschenfederkernmatratzen zum Einsatz kommen, bestehen diese aus Einzelteilen, wie beispielsweise Oberteil und Unterteil und einem zwischengeschalteten Federelement, welches oft auch noch aus mehreren Teilen besteht. Ein wesentlicher Nachteil bei diesen vorbekannten, aus Kunststoff bestehenden Federelementen besteht darin, dass diese, bevor sie zum Einsatz kommen, aufwendig zu montieren sind. Auch kann nicht verhindert werden, dass bei derartig eingesetzten montierten Federelementen diese unter hohen Belastungen hinsichtlich ihres zusammengesetzten Gefüges zerstört werden, so dass an einzelnen Stellen die Federwirkung nicht mehr gegeben ist.

So ist aus dem Stand der Technik gemäß der EP 1 843 059 ein aus Kunststoff gefertigtes einstückig geformtes Federkernelement bekannt, welches einen Auflageteller und eine Fußplatte umfasst, zwischen denen ein Federkörper aus vier Federelementen geformt ist. Die Federelemente sind dabei zwischen dem Auflageteller und der Fußplatte parallel zueinander angeordnet, wobei diese im Mittelbereich mit einem Steg untereinander verbunden sind. Als nachteilig bei dieser Ausführung wird es angesehen, dass einerseits durch die Anordnung der Federelemente eine richtungsunabhängige Beweglichkeit des Auflagetellers zur Fußplatte eingeschrägt wird, wobei andererseits der Verbund der Federelemente untereinander durch den Steg insbesondere eine richtungsunabhängige Federwirkung beeinträchtigt.

Eine weitere Ausführungsform des Standes Technik wird in der DE 20 2005 013 020 U1 beschrieben. Das in dieser Druckschrift offenbarte Federkernelement umfasst ebenfalls einen Auflageteller und eine Fußplatte mit vier Federelementen, die am Umfang des kreisförmigen Auflagetellers und der kreisförmigen Fußplatte abschnittsweise angeordnet sind. Dabei sind am Auflageteller und an der Fußplatte Lagerschalen angeformt, an die die Federelemente mit ihren freien Enden angeklipst werden. Das einzelne Federelement ist hierbei gewölbt ausgebildet, wobei die Wölbungen der Federkernelemente radial nach außen weisend angeordnet sind. Nachteilig bei dieser Ausführung ist es, dass einerseits die das Federkernelement bildenden Teile zu montieren sind, wobei andererseits durch die Anordnung der gewölbten Federelemente eine progressive Beweglichkeit des Auflagetellers zur Fußplatte bewirkt wird.

### Aufgabe

Der Erfindung stellt sich somit das Problem ein Federkernelement für eine Taschenfedermatratze derart weiter zu bilden, das die geschilderten Nachteile überwindet.

### Lösung

Das Problem wird durch den Hauptanspruch gelöst, wobei vorteilhafte Ausgestaltungen und Weiterbildungen der Erfindung sich aus den Unteransprüchen ergeben.

Bei der erfindungsgemäßen Lösung wird vorgesehen, dass das Federkernelement, welches aus Auflageteller, Fußplatte und Federkörper besteht, aus einem Kunststoffformteil gebildet wird, was insbesondere für das einzelne Federelement neben einer hohen Belastbarkeit auch den sofortigen Einsatz, das heißt also hier, das sofortige Einfügen nach der Herstellung in die einzelnen Taschen bzw. Hohlräume der Matratzen ermöglicht. Aufwendige Montagearbeiten im Vorfeld werden dadurch gänzlich überflüssig.

In der Erfindung besteht der eingeformte Federkörper aus vier separat heraus geformten Federelementen, wobei diese zwischen dem Auflageteller und der Fußplatte derart angeordnet sind, dass deren Einbindung in Bezug zur Zentralachse des Federelementes zueinander mit ihren Federwegen X-förmig ausgerichtet sind. Bei dieser Ausbildung des Federkernelementes, bei der die einzelnen Federarme zueinander eine Schrägstellung einnehmen, ergibt sich ein linearer Kraftverlauf der richtungsunabhängig ist. Weiterhin weist die Ausbildung der Federelemente noch den Vorteil auf, dass diese zur Mitte hin nicht miteinander verbunden sind und somit separat und unabhängig voneinander ihre Federwirkung entfalten können. Hierbei ist es von Vorteil, wenn an den inneren Eckkanten der Federelemente Verstärkungen vorgesehen werden. Hierdurch wird eine höhere Beweglichkeit der Feder erreicht. Die Härteverstellung des einzelnen Federkernelementes kann durch verschiedene Kunststoffmaterialien erreicht werden.

Hierzu ist in zweckmäßiger Weise das einzelne eingeformte Federelement in seiner Erstreckung zwischen dem Auflageteller und der Fußplatte als Z- oder W-Form ausgebildet. Dabei ist an den zur Zentralachse weisenden Winkelbereichen bzw. Eckkanten der einzelnen Federelemente ein halbkreisförmiger Verkantungsschutz oder Eingriffschutz zur Belastung angeformt. Dieser wirkt auch gleichzeitig für die Feder versteifend. Der Auflageteller sowie die Fußplatte weisen eine Wabenstruktur auf, wobei die Umfangsform des Auflagetellers bzw. der Fußplatte eine Kreisform oder eine Mehreckform, wie beispielsweise eine Rechteck-, Sechseck-, Achteckform oder dergleichen im Umfang aufweisen kann. Denkbar sind hierbei auch andere Ausgestaltungen der Flächenform.

Nach einer besonders vorteilhaften Ausgestaltung der Erfindung sind jeweils an den nach außen weisenden Oberflächen der Wabenstruktur kreuzartig ausgerichtete Einformungen vorgesehen, die zur Aufnahme bzw. zum Ansetzen von Verbindungslaschen für die Federkernelemente untereinander bestimmt sind. Somit ergibt sich die Möglichkeit, dass aus den Federkernelementen auch eine flächige gefederte Auflage gebildet werden kann, die aus den einzelnen Federkernelementen besteht. Hierzu weist die Verbindungslasche eine Streifenform auf, wobei jeweils am freien Ende des Streifens ein Zapfen in Achteckform angeformt ist, der in die Wabenöffnung in der Einformung zur herstellenden Verbindung eindrückbar ist. Somit kann beispielsweise das einzelne Federkernelement einmal von dem Auflageteller her sowie von der Fußplatte her in eine Flächenstruktur eingebunden werden.

Nach einer zweckmäßigen Ausgestaltung insbesondere des Streifens ist dieser zur Versteifung mit einer Herausformung versehen, so dass sich über die Erstreckung ein höheres Widerstandsmoment für das Streifenelement ergibt.

### Beschreibung der Zeichnungen

Ein Ausführungsbeispiel der Erfindung ist in den Zeichnungen rein schematisch dargestellt und wird nachfolgend näher beschrieben. Es zeigt:
- Figur 1: eine perspektivische Darstellung des erfindungsgemäßen Feder- kernelementes;
- Figur 2: eine Seitenansicht in einer ersten Ansicht des Federkernelemen- tes;
- Figur 3: eine weitere Seitenansicht des Federkernelementes in einer anderen Ansicht;
- Figur 4: eine weitere perspektivische Darstellung des Federkernelemen- tes gemäß der Figur 1 mit angesetzten Verbindungslaschen;
- Figur 5: Einzelansichten der Verbindungslasche in unterschiedlichen Darstellungen; und
- Figur 6: eine perspektivische Darstellung von mehreren Federkernele- menten im Verbund.

### Ausführungsbeispiele

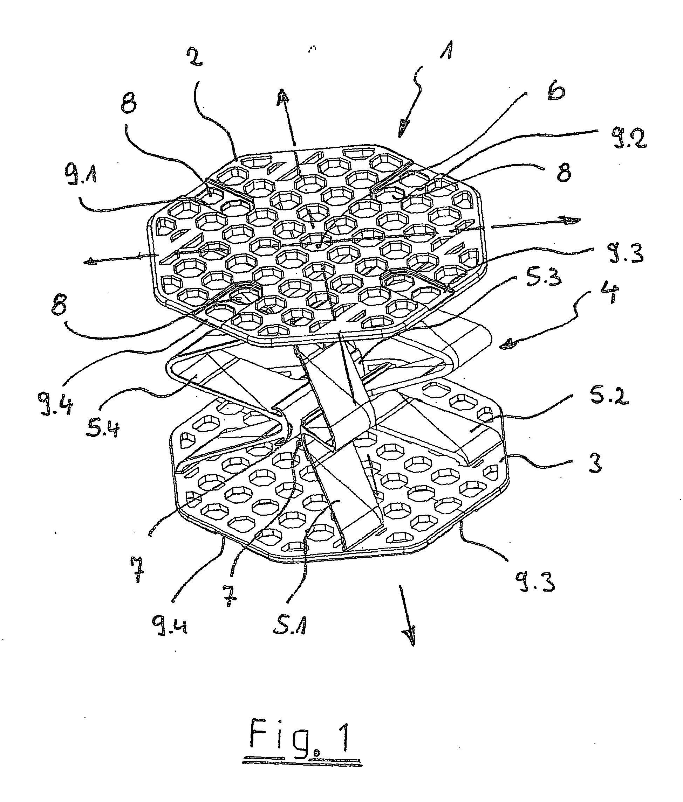

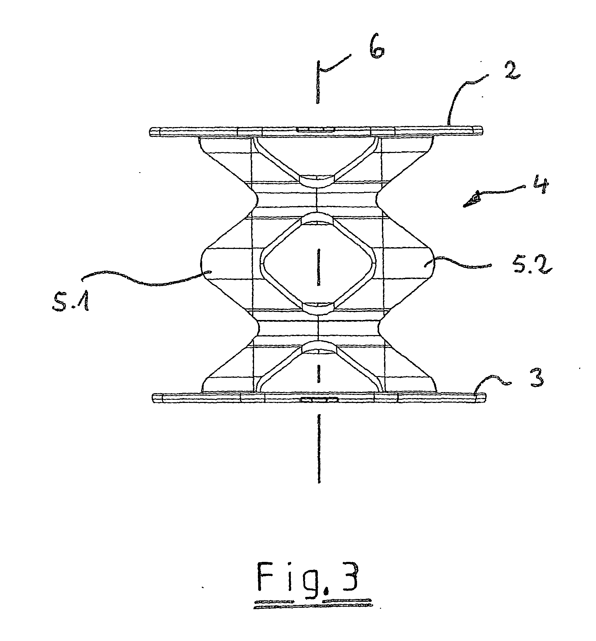

Die Figuren 1, 2 und 3 zeigen jeweils ein Federkernelement 1, welches insbesondere für den Einsatz in Hohlräumen von nicht näher dargestellten Taschenfederkernmatratzen bestimmt ist. Das Federkernelement 1 umfasst hierbei ein als Auflageteller 2 ausgebildetes Oberteil sowie ein als Fußplatte ausgebildetes Unterteil. Zwischen dem Auflageteller 2 und der Fußplatte 3 ist ein Federkörper 4 angeordnet. Dieses Federkernelement 1, wie es in den Figuren 1, 2 und 3 dargestellt ist, wird aus einem einstückigen Kunststoffformteil gebildet. Dabei besteht der eingeformte Federkörper 4 aus vier separat heraus geformten Federelementen 5.1, 5.2, 5.3, 5.4, wie dies insbesondere in der Figur 1 in der perspektivischen Darstellung zu erkennen ist. Die heraus geformten Federelemente 5.1, 5.2, 5.3, 5.4 sind zwischen dem Auflageteller 2 und der Fußplatte 3 derart angeordnet, dass ihre eingeformte Einbindung in Bezug zu einer Zentralachse 6 des Federkernelementes 1 zueinander mit ihren Federwegen X-förmig ausgerichtet sind. Die X Ausrichtung ist anhand von Pfeilen in der Figur 1 dargestellt. Die schräg zueinander ausgerichteten Federelemente 5.1 und 5.2 sind insbesondere in der Figur 3 zu erkennen, wo eine Ansicht gewählt wird, die die unter einem Winkel zueinander ausgerichteten Federelemente 5.1 und 5.2 wiedergibt. Die Anordnung bzw. die Einformung der separat ausgebildeten Federelemente 5.1, 5.2, 5.3, 5.4 hat den Vorteil, dass insbesondere ein richtungsunabhängiger linearer Kraftverlauf mit dem einstückig geformten Federkernelement 1 erreicht wird.

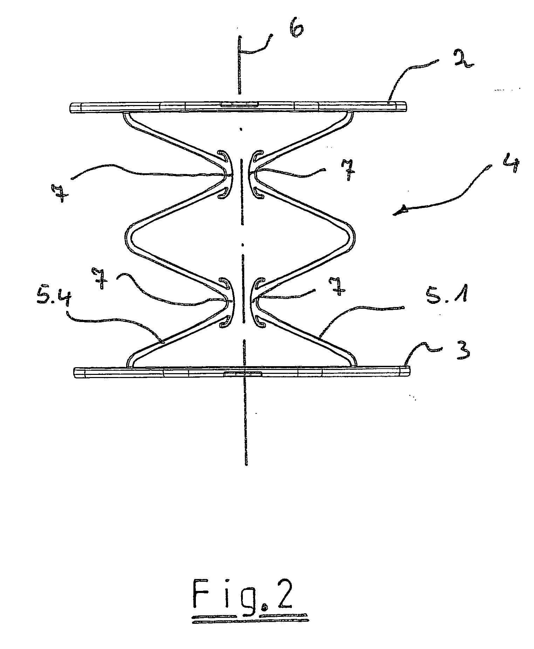

Wie insbesondere in der Figur 2 zu erkennen ist, weist das einzelne eingeformte Federelement 5.1, 5.2, 5.3, 5.4 winklig zueinander gestellte Arme auf, wobei die in der Figur 2 dargestellten Federkernelemente 5.1 und 5.4 in ihrer Erstreckung zwischen dem Auflageteller 2 und der Fußplatte 3 eine W-Form aufweisen. Wie insbesondere aus der Figur 2 auch zu erkennen ist, ist jeweils an den zur Zentralachse 6 weisenden Winkelbereichen der einzelnen Federelemente 5.1 und 5.4 ein halbkreisförmiger Verkantungsschutz oder Eingriffschutz 7 bei Belastung angeformt. Dieser Verkantungsschutz oder Eingriffschutz 7 weist einmal den Vorteil auf, dass die Winkelspitzen hier bei Belastung des Federkernelementes 1 aneinander reiben können, ohne dass es zu einem Ineinandergreifen der Federelemente 5.1, 5.2, 5.3, 5.4 kommt. Zu dem haben die angeformten Halbkreise den Vorteil, dass hier insbesondere in den nach innen weisenden, also zur Zentralachse 6 weisenden Winkelspitzen eine Versteifung des Federkernelementes 1 vorgenommen werden kann.

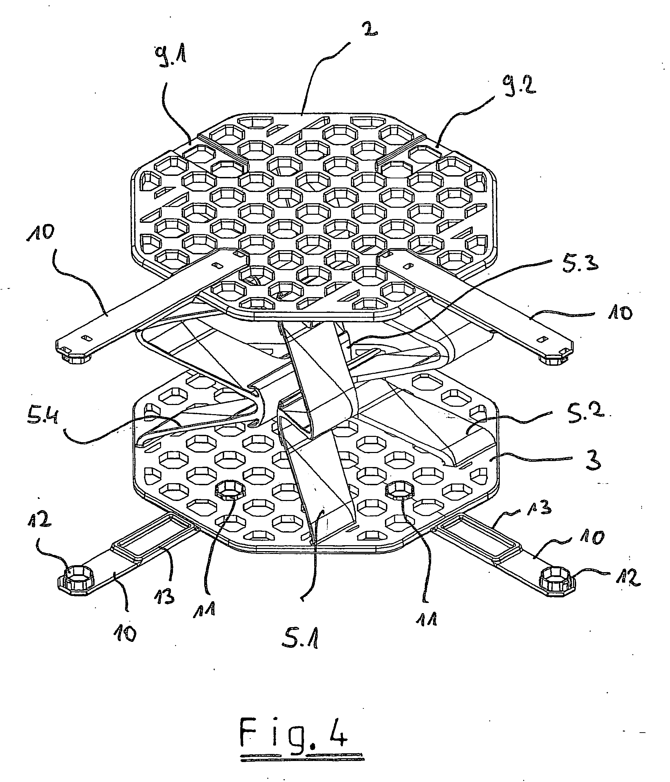

Wie insbesondere aus der Figur 1 aber auch aus der Figur 4 zu erkennen ist, weisen der Auflageteller 2 sowie die Fußplatte 3 eine Wabenstruktur auf. Wie zu erkennen ist, sind über die Fläche des Auflagetellers 2 und über die Fläche der Fußplatte 3 achteckförmige Wabenöffnungen 8 verteilt angeordnet. Auflageteller 2 sowie die Fußplatte 3 weisen in dem gezeigten Beispiel eine Fläche auf, deren Umfang eine Achteckform einnimmt. Der Auflageteller 2 sowie die Fußplatte 3 können auch eine Kreisform oder eine Mehreckform, wie beispielsweise eine Rechteck- oder Sechseckform im Umfang aufweisen. Denkbar sind hierbei auch andere Ausgestaltungen der Flächenform.

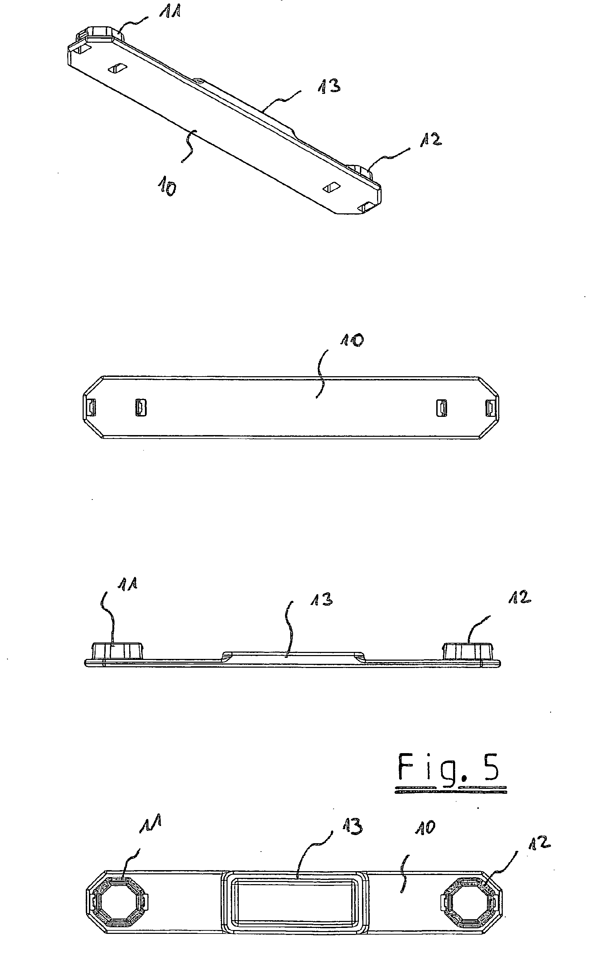

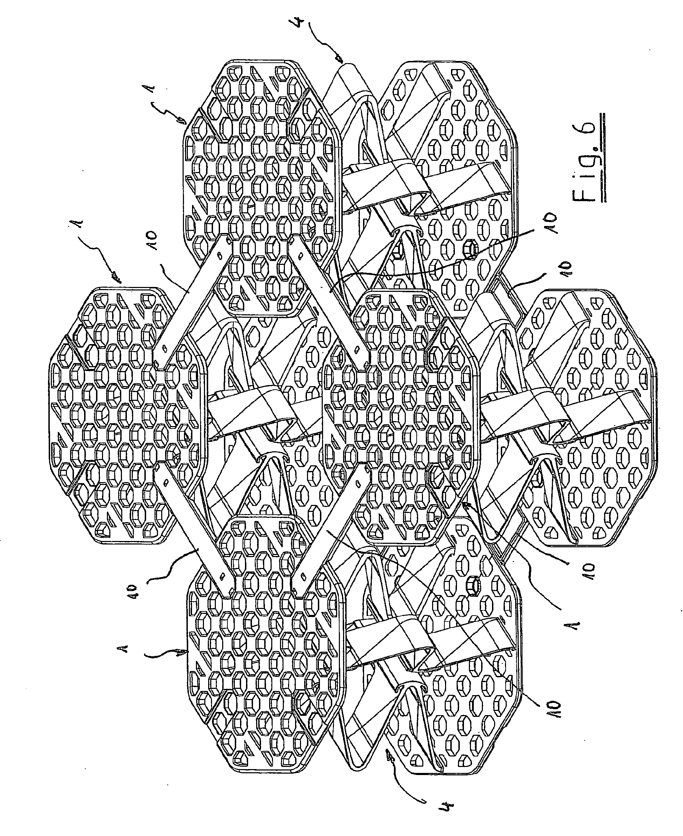

In Weiterbildung des einzelnen Federkernelementes 1 wird nach der Erfindung vorgesehen, dass jeweils an den nach außen weisenden Oberflächen von Auflageteller 2 und Fußplatte 3 kreuzartig ausgerichtete Einformungen 9.1, 9.2, 9.3, und 9.4 vorgesehen sind, zur Aufnahme bzw. zum Ansetzen von Verbindungslaschen 10, wie dies in Einzelansicht in der Figur 5 gezeigt wird. Diese Verbindungslaschen 10 ermöglichen die einzelnen Federkernelemente 1 untereinander zu verbinden, wie dies beispielsweise in der Figur 6 in der Perspektive dargestellt wird. Die einzelne Verbindungslasche 10 weist hierbei eine Streifenform auf, wobei jeweils am freien Ende des Streifens ein Zapfen 11 und 12 in Achtkantform angeformt ist, der in die Wabenöffnung 8 in der Einformung 9.1, 9.2, 9.3, und 9.4 zur herstellenden Verbindung eindrückbar ist. Denkbar sind auch andere Formen, um die Formschlussverbindung zwischen der Verbindungslasche und den Flächenbereichen von Auflageteller 2 und Fußplatte 3 herzustellen. Wie insbesondere aus der Figur 5 deutlich zu erkennen ist, ist zur Versteifung des Streifens an einer der Flächen des Streifens eine Erhebung angeformt. Diese Erhebung 13 bewirkt über den mittleren Erstreckungsbereich des Streifens eine Erhöhung der Versteifung des Streifens. Sind die Streifen an den Federkernelementen 1 angesetzt, so ergibt sich, wie schon bereits oben erwähnt, eine flächige federnde Struktur, die sich aus den erfindungsgemäßen Federkernelementen 1 zusammensetzt.

### Bezugszeichenliste

- 01: Federkernelement
- 02: Auflageteller
- 03: Fußplatte
- 04: Federkörper
- 05.: Federelemente 5.1, 5.2, 5.3, 5.4
- 06: Zentralachse
- 07: Verkantungsschutz
- 08: Öffnung
- 09.: Einformung 9.1, 9.2, 9.3, 9.4
- 10: Verbindungslasche
- 11: Zapfen
- 12: Zapfen
- 13: Erhebung

## Patentansprüche

1. Federkernelement (1) für den Einsatz in eine Matratze, beispielsweise Taschenfederkernmatratze, umfassend ein als Auflageteller (2) ausgebildetes Oberteil sowie ein als Fußplatte (3) ausgebildetes Unterteil, wobei zwischen dem Auflageteller (2) und der Fußplatte (3) ein Federkörper (4) angeordnet ist, wobei der eingeformte bzw. zwischengeformte Federkörper (4) aus vier separat heraus geformten Federelementen (5.1, 5.2, 5.3 und 5.4) besteht, wobei
das Federkernelement (1) bestehend aus Auflageteller (2), Fußplatte (3) und Federkörper (4) aus einem einstückig geformten Kunststoffformteil gebildet ist, wobei , das einzelne eingeformte Federelement (5.1, 5.2, 5.3 bzw. 5.4) in seiner Erstreckung zwischen dem Auflageteller (2) und der Fußplatte (3) eine Z- oder W- Form aufweist, **dadurch gekennzeichnet, dass** die heraus geformten Federelemente (5.1, 5.2, 5.3 und 5.4) zwischen dem Auflageteller (2) und der Fußplatte (3) derart angeordnet sind, dass deren Einbindung, in Blickrichtung entlang einer Zentralachse (6) des Federkernelementes (1) gesechen, zueinander mit ihren Federwegen X-förmig ausgerichtet ist.

2. Federkernelement nach Anspruch 1,
**dadurch gekennzeichnet,**
**dass** an den zur Zentralachse (6) weisenden Winkelbereichen der einzelnen Federelemente (5.1, 5.2, 5.3 und 5.4) ein halbkreisförmiger Verkantungsschutz oder Eingriffschutz (7) bei Belastung angeformt ist.

3. Federkernelement nach Anspruch 2,
**dadurch gekennzeichnet,**
**dass** der Auflageteller (2) sowie die Fußplatte (3) eine Wabenstruktur aufweisen.

4. Federkernelement nach Anspruch 3,
**dadurch gekennzeichnet,**
**dass** der Auflageteller (2) sowie die Fußplatte (3) mit der Wabenstruktur eine Kreisform oder Mehreckform, wie beispielsweise eine Rechteck-, Sechseck-, Achteckform oder dergleichen im Umfang aufweisen.

5. Federkernelement nach Anspruch 4,
**dadurch gekennzeichnet,**
**dass** jeweils in der nach außen weisenden Oberfläche des Auflagetellers (2) und der Fußplatte (3) kreuzartig ausgerichtete Einformungen (9.1, 9.2, 9.3, und 9.4) vorgesehen sind zur Aufnahme bzw. zum Ansetzen von Verbindungslaschen (10) für die Federkernelemente (1) untereinander.

6. Federkernelement nach Anspruch 5,
**dadurch gekennzeichnet,**
**dass** die Verbindungslasche (10) eine Streifenform aufweist, wobei jeweils am freien Ende des Streifens ein Zapfen (11) und (12) in Achtkantform angeformt ist, der in die Wabenöffnung (8) in der Einformung (9.1, 9.2, 9.3, und 9.4) zur herstellenden Verbindung eindrückbar ist.

7. Federkernelement nach Anspruch 6,
**dadurch gekennzeichnet,**
**dass** zur Versteifung des Streifens an einer der Flächen des Streifens eine Erhebung (13) angeformt ist.

## Claims

1. A spring-core element (1) for use in a mattress, for example, a pocket-spring mattress, comprising an upper part embodied as a support plate (2) and a lower part embodied as a base plate (3), wherein a spring body (4) is arranged between the support plate (2) and the baseplate (3), wherein the moulded and/or shaped spring body (4) comprises four separate spring elements (5.1, 5.2, 5.3 and 5.4) formed from the latter,
wherein the spring-core element (1) comprising the support plate (2), base plate (3) and spring body (4) is made from a moulded synthetic-material part moulded in one piece,
wherein the individual moulded spring element (5.1, 5.2, 5.3 or 5.4) provides a Z-shape or W-shape in its extension between the support plate (2) and the baseplate (3), **characterised in that** the spring elements (5.1, 5.2, 5.3 and 5.4) formed from the this are arranged between the support plate (2) and the baseplate (3) in such a manner that their configuration, when viewed in the direction along a central axis (6) of the spring-core element (1), is orientated with their spring travel in an X-shape relative to one another.

2. The spring-core element according to claim 1, **characterised in that** a semicircular guard (7) for prevention of jamming or locking under loading is moulded onto the angled regions facing towards the central axis (6) of the individual spring elements (5.1, 5.2, 5.3, and 5.4).

3. The spring-core element according to claim 2, **characterised in that** the support plate (2) and the base plate (3) provide a honeycomb structure.

4. The spring-core element according to claim 3, **characterised in that** the support plate (2) and the baseplate (3) with honeycomb structure provide a circular shape or polygonal shape in circumference, for example, a rectangular, hexagonal, octagonal or similar shape.

5. The spring-core element according to claim 4, **characterised in that** moulded recesses (9.1, 9.2, 9.3 and 9.4) orientated in a cross shape on each outwardly facing surface of the support plate (2) and the baseplate (3) are provided for receiving or for the attachment of straps (10) for connection between the spring-core elements (1).

6. The spring-core element according to claim 5, **characterised in that** the connecting strap (10) provides a strip shape, wherein a peg (11) and (12) with an octagonal shape, which can be pressed into the honeycomb opening (8) in the moulded recess (9.1, 9.2, 9.3, and 9.4) in order to manufacture the connection, is moulded at each free end of the strip.

7. The spring-core element according to claim 6, **characterised in that** an elevation (13) is moulded on one of the surfaces of the strip for the reinforcement of the strip.

## Revendications

1. Elément à centre élastique (1) pour insertion dans un matelas, notamment un matelas à ressorts alvéolé, comprenant une partie supérieure se présentant sous la forme d'une plaque d'appui (2) et une partie inférieure se présentant sous la forme d'une plaque de base (3), dans lequel un corps élastique (4) est agencé entre la plaque d'appui (2) et la plaque de base (3), dans lequel le corps élastique (4) moulé intérieurement ou moulé intermédiairement comprend quatre éléments à ressort (5.1, 5.2, 5.3 et 5.4) formés séparément, dans lequel :
l'élément à centre élastique (1) comprenant une plaque d'appui (2), une plaque de base (3) et un corps élastique (4) est formé d'une pièce moulée en matériau synthétique formée d'un seul tenant, dans lequel l'élément à ressort (5.1, 5.2, 5.3 ou 5.4) individuel moulé présente dans son extension, entre la plaque d'appui (2) et la plaque de base (3), une forme en Z ou en W, **caractérisé en ce que**
les éléments à ressort (5.1, 5.2, 5.3 et 5.4) qui en sont formés sont agencés entre la plaque d'appui (2) et la plaque de base (3) de sorte que leur liaison mutuelle, observée dans une direction d'observation le long d'un axe central (6) de l'élément à centre élastique (1), soit arrangée en forme de X avec leurs directions de débattement.

2. Elément à centre élastique selon la revendication 1,
**caractérisé en ce que**
une protection semi-circulaire contre un blocage ou une prise (7) en cas de sollicitation est formée sur les zones angulaires des éléments à ressort individuels (5.1, 5.2, 5.3 et 5.4) dirigées vers l'axe central (6)

3. Elément à centre élastique selon la revendication 2,
**caractérisé en ce que**
la plaque d'appui (2) et la plaque de base (3) présentent une structure alvéolaire.

4. Elément à centre élastique selon la revendication 3,
**caractérisé en ce que**
la plaque d'appui (2) et la plaque de base (3) avec la structure alvéolaire présentent en circonférence une forme circulaire ou une forme polygonale, telle qu'une forme rectangulaire, hexagonale, octogonale ou similaire.

5. Elément à centre élastique selon la revendication 4,
**caractérisé en ce que**
l'on prévoit respectivement des moulures (9.1, 9.2, 9.3 et 9.4) arrangées en forme de croix dans la surface dirigée vers l'extérieur de la plaque d'appui (2) et de la plaque de base (3) pour recevoir ou appliquer des pattes de liaison (10) des éléments à centre élastique (1) les uns aux autres.

6. Elément à centre élastique selon la revendication 5,
**caractérisé en ce que**
la patte de liaison (10) présente une forme de bande, dans lequel un tenon (11) et (12) à 8 pans est moulé à chaque extrémité libre de la bande, lequel tenon peut être enfoncé dans l'ouverture alvéolaire (8) de la moulure (9.1, 9.2, 9.3 et 9.4) pour la liaison à établir.

7. Elément à centre élastique selon la revendication 6,
**caractérisé en ce que**,
pour renforcer la bande, une surélévation (13) est moulée sur une des surfaces de la bande.
